# EUROPEAN PATENT SPECIFICATION

(11) **EP 3 778 739 B1**
(45) Date of publication and mention of the grant of the patent: **03.09.2025**
(21) Application number: 19778204.8
(22) Date of filing: 29.03.2019
(51) Int. Cl.: C08J 9/06, B29C 44/00, B29C 44/34, B60R 13/02, B29K 23/00, B29L 9/00, B29L 31/58, C08J 9/00, C08J 9/10

(54) **POLYOLEFIN RESIN FOAM, METHOD FOR PRODUCING POLYOLEFIN RESIN FOAM, AND MOLDED BODY**
POLYOLEFINHARZSCHAUMSTOFF, VERFAHREN ZUR HERSTELLUNG DES POLYOLEFINHARZSCHAUMSTOFFS UND FORMKÖRPER
MOUSSE DE RÉSINE DE POLYOLÉFINE, PROCÉDÉ DE PRODUCTION DE MOUSSE DE RÉSINE DE POLYOLÉFINE ET CORPS MOULÉ

(30) Priority: 30.03.2018 JP 2018070169; 26.09.2018 JP 2018180757
(43) Date of publication of application: 17.02.2021
(73) Proprietor: SEKISUI CHEMICAL CO., LTD., Osaka-shi Osaka 530-8565 (JP)
(72) Inventor: KANAZAWA, Futoshi, Hasuda-shi, Saitama 349-0198 (JP); UNO, Takumei, Hasuda-shi, Saitama 349-0198 (JP); TAKASUGI, Hajime, Hasuda-shi, Saitama 349-0198 (JP); SUGIE, Yukihiro, Hasuda-shi, Saitama 349-0198 (JP); MIKAMI, Hiroki, Hasuda-shi, Saitama 349-0198 (JP)
(74) Representative: Ter Meer Steinmeister & Partner
(86) International application number: PCT/JP2019/014205
(87) International publication number: WO 2019/189836

(56) References cited:
- EP-A1- 2 137 253
- JP-A- 2000 159 950
- JP-A- 2004 149 665
- JP-A- 2015 187 232
- JP-A- H05 214 143
- JP-A- H08 245 820
- JP-A- H1 160 774
- JP-A- H10 310 668
- JP-A- S5 962 643
- JP-A- S59 215 329

## Description

### Technical Field

The present invention relates to a polyolefin resin foam, a method for producing a polyolefin resin foam, and a formed product.

### Background Art

Polyolefin resin foams have excellent heat resistance and heat insulation, and thus have been used heretofore in a broad range of fields as heat insulators, cushions, and the like. Especially, in automobile applications, polyolefin resin foams are used as heat insulators and interior materials such as ceilings, doors, instrument panels, and cooler covers.

Polyolefin resin foams are often produced by a method in which a composition containing a polyolefin resin and a foaming agent is foamed by heating, and, in some cases, an odor that is considered to result from the decomposition product of the polyolefin resin is problematic. For example, it is often the case that a user feels uncomfortable due to an odor emitted in an automobile having a formed product of a polyolefin resin foam as an automobile interior material.

Known techniques for suppressing the odor of a polyolefin resin foam are, for example, a method involving a deodorant such as activated carbon or the like (Patent Literature 1), a method involving carbon black or the like as an odor suppressant (Patent Literature 2), and the like.

Patent Literature 3 discloses a crosslinked synthetic resin foam that can be easily manufactured and is excellent in bonding, molding, heat resistance and rigidity. The crosslinked foam is obtained by crosslinking and foaming a propylene/α-olefin copolymer having an isotacticity of 40% or more and containing 1 to 15% by weight of an α-olefin having a carbon number of 4 to 10. In one embodiment, the α-olefin having a carbon number of 4 to 10 is 1-butene.

Patent Literature 4 describes a crosslinked synthetic resin foam that can be easily manufactured and has good adhesiveness, heat molding properties, heat resistance and rigidity. The crosslinked foam is obtained by crosslinking and foaming a propylene-ethylene-α-olefin copolymer having an isotacticity of 40% or more, wherein the propylene-ethylene-α-olefin copolymer comprises 1 to 10% by weight of ethylene component and 1 to 10% by weight of an α-olefin component having 4 to 10 carbon atoms and the total amount of both components is 2 to 15% by weight.

Patent Literature 5 teaches a polypropylene-based resin crosslinked foam that has good elongation at a high temperature, temperature dependence and bride during molding. The crosslinked foam is obtained by crosslinking and foaming a composition comprising a polypropylene-based resin including 40 to 75 parts by weight of an ethylene-propylene random copolymer having a melting point of 130 to 145° C, 5 to 40 parts by weight of an ethylene-propylene-butene random copolymer having a melting point of 120 to 140° C, and 5 to 40 parts by weight of a polyethylene-based resin having a melting point of 105 to 135° C.

Patent Literature 6 suggests a foam that is obtained by foam molding a polypropylene-based resin composition which is readily moldable into a shape and is excellent in expansion moldability. The polypropylene-based resin composition comprises 30 to 99.99% by weight of a polypropylene-based resin and 0.1 to 70% by weight of a crosslinked polypropylene obtained by irradiation with electron beams, and satisfies the following requirements (a) and (b): (a) the melt flow rate at 230°C under a load of 2,160 g is 0.5 to 10 g/10 min, and (b) the gel fraction is 0.05 to 20%.

### Citation List

### Patent Literature

PTL1: JP H11-60774 A
PTL2: JP H11-263863 A
PTL3: JP S59 215329 A
PTL4: JP S59 62643 A
PTL5: JP H05 214143 A
PTL6: JP 2000 159950 A

### Summary of Invention

### Technical Problem

However, for example, automobiles having an automobile interior material made of a formed product of a polyolefin resin foam are problematic in that the odor cannot be sufficiently suppressed by conventional techniques especially in hot summertime.

Accordingly, an object of the present invention is to provide a polyolefin resin foam capable of reducing odor emission.

### Solution to Problem

As a result of having conducted diligent research to achieve the above object, the inventors have found that the odor emitted from polyolefin resin foams and especially such an odor emitted in hot summertime result from aldehyde compounds having 6 to 11 carbon atoms. Based this finding, the present inventors have further found that odor emission can be reduced by controlling the content of aldehyde compounds having 6 to 11 carbon atoms in polyolefin resin foams to be at a certain level or less, and thus have accomplished the present invention. The invention is defined in the claims.

In a first aspect, the present invention thus relates to a polyolefin resin foam as defined in claim 1. The polyolefin resin foam has a content of aldehyde compounds having 6 to 11 carbon atoms of 0.1 ppm or less and is obtained by foaming a foamable composition comprising a polyolefin resin. The foamable composition comprises 1.0 to 5.0 parts by mass of an antioxidant relative to 100 parts by mass of the polyolefin resin, and further comprises 2.0 to 5.0 parts by mass of a crosslinking aid relative to 100 parts by mass of the polyolefin resin.

In a second aspect, the present invention relates to a method for producing the polyolefin resin foam of the first aspect as defined in claim 7. The method comprises steps 1 to 3 below:
(step 1) the step of processing a foamable composition comprising a polyolefin resin into a sheet form to produce a foamable sheet;
(step 2) the step of irradiating the foamable sheet with ionizing radiation in an irradiation dose of 1.2 to 2.5 Mrad to produce a crosslinked foamable sheet; and
(step 3) the step of causing the crosslinked foamable sheet to foam to produce the polyolefin resin foam.
In a third aspect, the present invention relates to a formed product as defined in claim 9. The formed product is obtained by shaping the polyolefin resin foam of the first aspect.

### Advantageous Effects of Invention

The present invention can provide a polyolefin resin foam capable of reducing odor emission.

### Description of Embodiments

### [Polyolefin resin foam]

### <Content of aldehyde compound>

The polyolefin resin foam of the present invention has a content of aldehyde compounds having 6 to 11 carbon atoms of 0.1 ppm or less. The content of aldehyde compounds is an amount by volume (vol ppm). Also, the content of aldehyde compounds having 6 to 11 carbon atoms means the total amount of individual aldehyde compound between 6 and 11 carbon atoms.

When the content of aldehyde compounds having 6 to 11 carbon atoms exceeds 0.1 ppm, an odor is likely emitted from the polyolefin resin foam. The content of aldehyde compounds having 6 to 11 carbon atoms is preferably 0.08 ppm or less, and more preferably 0.05 ppm or less. When the content of aldehyde compounds having 6 to 11 carbon atoms is within such a range, the odor emitted from the polyolefin resin foam can be further reduced.

Examples of aldehyde compounds having 6 to 11 carbon atoms include n-hexylaldehyde, 2-ethylbutyraldehyde, n-heptylaldehyde, 2-ethylhexylaldehyde, n-octylaldehyde, n-nonylaldehyde, n-decylaldehyde, benzaldehyde, cinnamaldehyde, and n-undecylaldehyde.

The method for adjusting the content of aldehyde compounds having 6 to 11 carbon atoms in the polyolefin resin foam to 0.1 ppm or less is not particularly limited. Examples thereof include methods involving suitably controlling the amounts of an antioxidant and a crosslinking aid in a foamable composition for producing the foam, irradiating conditions of ionizing radiation and foaming conditions during the production of the foam.

### <n-Nonylaldehyde>

For the polyolefin resin foam of the present invention, the n-nonylaldehyde concentration of the aldehyde compound-containing nitrogen gas is preferably 0.07 vol ppm or less. The aldehyde compound-containing nitrogen gas refers to a gas obtained by filling a 10 L sampling bag containing 2 pieces of the polyolefin resin foam having a size of 100 mm × 100 mm × 3.1 ± 0.2 mm with 5 L of nitrogen gas and then heating the sampling bag at a heating temperature of 80°C for 2 hours. More specifically, it is an aldehyde compound-containing nitrogen gas obtained by the method described in the Examples later. When the n-nonylaldehyde concentration of the aldehyde compound-containing nitrogen gas is 0.07 vol ppm or less, the odor emitted from the polyolefin resin foam is weak. The n-nonylaldehyde concentration of the aldehyde compound-containing nitrogen gas is more preferably 0.05 vol ppm or less, and even more preferably 0.03 vol ppm or less. When the n-nonylaldehyde concentration of the aldehyde compound-containing nitrogen gas is within such a range, the odor emitted from the polyolefin resin foam can be further reduced.

### <n-Octylaldehyde>

The polyolefin resin foam of the present invention is preferably a polyolefin resin foam providing a n-octylaldehyde concentration of the aldehyde compound-containing nitrogen gas is 0.03 vol ppm or less.

When the n-octylaldehyde concentration of the aldehyde compound-containing nitrogen gas is 0.03 vol ppm or less, the odor emission of the polyolefin resin foam can be further reduced. The n-octylaldehyde concentration of the aldehyde compound-containing nitrogen gas is more preferably 0.02 vol ppm or less, and further preferably 0.015 vol ppm or less. When the n-octylaldehyde concentration of the aldehyde compound-containing nitrogen gas is within such a range, the odor emission of the polyolefin resin foam can be further reduced.

### <n-Heptylaldehyde>

For the polyolefin resin foam of the present invention, the n-heptylaldehyde concentration of the aldehyde compound-containing nitrogen gas is preferably 0.03 vol ppm or less.

When the n-heptylaldehyde concentration of the aldehyde compound-containing nitrogen gas is 0.03 vol ppm or less, the odor emission of the polyolefin resin foam can be further reduced. The n-heptylaldehyde concentration of the aldehyde compound-containing nitrogen gas is more preferably 0.02 vol ppm or less, and further preferably 0.015 vol ppm or less. When the n-heptylaldehyde concentration of the aldehyde compound-containing nitrogen gas is within such a range, the odor emission of the polyolefin resin foam can be further reduced.

### <n-Decylaldehyde>

For the polyolefin resin foam of the present invention, the n-decylaldehyde concentration of the aldehyde compound-containing nitrogen gas is preferably 0.03 vol ppm or less.

When the n-decylaldehyde concentration of the aldehyde compound-containing nitrogen gas is 0.03 vol ppm or less, the odor emission of the polyolefin resin foam can be further reduced. The n-decylaldehyde concentration of the aldehyde compound-containing nitrogen gas is more preferably 0.02 vol ppm or less, and further preferably 0.015 vol ppm or less. When the n-decylaldehyde concentration of the aldehyde compound-containing nitrogen gas is within such a range, the odor emission of the polyolefin resin foam can be further reduced.

The method for adjusting the concentrations of n-nonylaldehyde, n-octylaldehyde, n-heptylaldehyde, and n-decylaldehyde in the aldehyde compound-containing nitrogen gas so as to be within the above content ranges, respectively, is not particularly limited. Examples of such methods include those involving suitably controlling the amounts of additives such as an antioxidant, a heavy metal deactivator, and a crosslinking aid in a foamable composition used to produce the foam, irradiation conditions of ionizing radiation during the crosslinking of the foamable composition, and the temperature during the foaming of the foamable composition.

### <Expansion ratio>

The expansion ratio of the polyolefin resin foam of the present invention is not particularly limited, and is preferably 5 to 25 cc/g, more preferably 10 to 22 cc/g, and even more preferably 12 to 20 cc/g. When the expansion ratio is 5 cc/g or more, the flexibility of the foam is readily ensured, and when the expansion ratio is 25 cc/g or less, the mechanical strength of the foam can be improved.

### (Apparent density)

The apparent density of the polyolefin resin foam of the present invention is not particularly limited, and is preferably 20 to 300 kg/m³, and more preferably from 25 to 250 kg/m³. When the apparent density is 20 kg/m³ or more, the mechanical strength of the foam can be improved, and when the apparent density is 300 kg/m³ or less, the flexibility of the foam can be readily ensured. The apparent density of the crosslinked polyolefin resin foam is measured by the method described in the Examples later.

### <Thickness>

The thickness of the polyolefin resin foam is not particularly limited, and is preferably 1.1 to 10 mm, more preferably 1.5 to 8 mm, and even more preferably 2 to 5 mm.

### <Antioxidant>

The polyolefin resin foam of the present invention is a foam obtained by foaming a foamable composition containing a polyolefin resin.

The foamable composition contains an antioxidant. Since an antioxidant is contained, oxidative degradation of the polyolefin resin can be suppressed. The antioxidant is contained in an amount of 1.0 to 5.0 parts by mass and preferably 1.5 to 4.5 parts by mass relative to 100 parts by mass of the polyolefin resin.

When the amount of the antioxidant is 1.0 part by mass or more relative to 100 parts by mass of the polyolefin resin, oxidative degradation of the polyolefin resin is suppressed, and the concentration of aldehyde compounds having 6 to 11 carbon atoms can be reduced. When the amount of the antioxidant is 5.0 parts by mass or less relative to 100 parts by mass of the polyolefin resin, an excessive antioxidant can be suppressed from turning into an odorous substance, and thus the concentration of aldehyde compounds having 6 to 11 carbon atoms can be reduced.

Also, when the antioxidant in the foamable composition is within the above range, release of linear aldehyde compounds having 7 to 10 carbon atoms, especially n-nonylaldehyde, from the polyolefin resin foam can be further reduced.

The type of the antioxidant is not particularly limited, and examples include phenolic antioxidants, sulfuric antioxidants, phosphoric antioxidants, and amine antioxidants. Among these, phenolic antioxidants are preferable in view of reducing the concentration of aldehyde compounds having 6 to 11 carbon atoms and, in particular, in view of reducing the amount released of linear aldehyde compounds having 7 to 10 carbon atoms, especially n-nonylaldehyde.

Examples of phenolic antioxidants include 2,6-di-tert-butyl-p-cresol, n-octadecyl-3-(3,5-di-tert-butyl-4-hydroxyphenyl)propionate, 2-tert-butyl-6-(3-tert-butyl-2-hydroxy-5-methylbenzyl)-4-methylphenyl acrylate, and tetrakis[methylene-3-(3,5-di-tert-butyl-4-hydroxyphenyl)propionate]methane. Among these, tetrakis[methylene-3-(3,5-di-tert-butyl-4-hydroxyphenyl)propionate]methane is preferred.

One antioxidant may be used singly, and two or more thereof may be used in combination.

### <Crosslinking aid>

The foamable composition further contains a crosslinking aid. The crosslinking aid content of the foamable composition is 2.0 to 5.0 parts by mass and preferably 2.5 to 4.7 parts by mass relative to 100 parts by mass of the polyolefin resin.

When the crosslinking aid is 2.0 parts by mass or more relative to 100 parts by mass of the polyolefin resin, the concentration of aldehyde compounds having 6 to 11 carbon atoms in the foam can be reduced. This is presumably because progress of the crosslinking of the polyolefin resin to a certain extent suppresses degradation due to heat or the like to thereby suppress the production of the aldehyde compounds. When the crosslinking aid is 5.0 parts by mass or less relative to 100 parts by mass of the polyolefin resin, poor foaming is likely prevented.

Moreover, when the amount of the crosslinking aid in the foamable composition is within such a range together with the amount of the antioxidant within the above range, the concentration of aldehyde compounds having 6 to 11 carbon atoms can be more effectively reduced, and, in particular, the amount of linear aldehyde compounds having 7 to 10 carbon atoms, especially n-nonylaldehyde, released can be reduced.

Examples of the crosslinking aid include polyfunctional (meth)acrylate compounds such as trifunctional (meth)acrylate compounds and bifunctional (meth)acrylate compounds, and compounds having three functional groups within one molecule. Examples of other crosslinking aids include compounds having two functional groups within one molecule such as divinylbenzene, and diallyl phthalate, diallyl terephthalate, diallyl isophthalate, ethyl vinyl benzene, lauryl methacrylate, and stearyl methacrylate.

Examples of trifunctional (meth)acrylate compounds include trimethylolpropane trimethacrylate and trimethylolpropane triacrylate.

Examples of bifunctional (meth)acrylate compounds include 1,6-hexanediol dimethacrylate, 1,9-nonanediol dimethacrylate, 1,10-decanediol dimethacrylate, and neopentyl glycol dimethacrylate.

Examples of compounds having three functional groups within one molecule include a trimellitic acid triallyl ester, a 1,2,4-benzenetricarboxylic acid triallyl ester, and triallyl isocyanurate.

One crosslinking aid can be used singly, and two or more thereof can be used in combination.

Among these polyfunctional (meth)acrylate compounds are preferred, bifunctional (meth)acrylate compounds are more preferred, and 1,9-nonanediol dimethacrylate is even more preferred, in view of reducing the concentration of aldehyde compounds having 6 to 11 carbon atoms.

### <Polyolefin resin>

Examples of the polyolefin resin contained in the foamable composition include polyethylene resins, polypropylene resins, ethylene vinyl acetate resins, and polyolefin thermoplastic elastomers. As for the polyolefin resin, a polypropylene resin is preferably contained, and both a polypropylene resin and a polyethylene resin are more preferably contained, in view of improving the heat resistance and the forming workability of the resulting polyolefin resin foam.

Examples of polypropylene resins include homopolypropylene, ethylene-propylene random copolymers containing propylene as a main component, and ethylene-propylene block copolymers containing propylene as a main component. One of these may be used singly, and two or more thereof may be used in combination. In particular, ethylene-propylene random copolymers containing propylene as a main component are preferably used.

The melt flow rate (hereinafter referred to as "MFR") of the polypropylene resins is preferably 70 g/10 min or less, more preferably 50 g/10 min or less, and even more preferably 25 g/10 min or less. The lower limit of MFR is usually 0.1 g/10 min.

The MFR is a value measured under conditions of a temperature of 230°C and a load of 21.2 N in accordance with JIS K 7210.

Polyethylene resins are not particularly limited, and examples include low density polyethylene, medium density polyethylene, high density polyethylene, linear low density polyethylene, ethylene-α-olefin copolymers containing ethylene as a main component. One of these may be used singly, and two or more thereof may be used in combination. Among the above polyethylene resins, linear low-density polyethylene is preferable. The density of linear low density polyethylene is preferably 0.910 to 0.925 g/cm³, and more preferably 0.912 to 0.922 g/cm³.

The MFR of the polyethylene resins is preferably 0.5 to 70 g/10 min, more preferably 1.5 to 50 g/10 min, and even more preferably 2 to 30 g/10 min.

The MFR is a value measured under conditions of a temperature of 190°C and a load of 21.2 N in accordance with JIS K 7210.

When the polyolefin resin contains a polypropylene resin, the polyolefin resin preferably contains a polypropylene resin in an amount of preferably 50% by mass or more and more preferably 60% by mass or more in view of improving heat resistance.

When the polyolefin resin contains a polyethylene resin and a polypropylene resin, the amount of the polypropylene resin is preferably greater, and the polypropylene resin is preferably 55% by mass or more and more preferably 60% by mass or more based on the total amount of the polyethylene resin and the polypropylene resin. With such an amount, the heat resistance and the flexibility of the polyolefin resin foam are improved.

While the foamable composition may contain resins other than the polyolefin resin, the polyolefin resin content in the polyolefin resin foam is preferably 70% by mass or more, more preferably 90% by mass or more, and even more preferably 95% by mass or more.

When the polyolefin resin contains a polypropylene resin, the foamable composition needs to be foamed at high temperature. Accordingly, when the polyolefin resin contains a polypropylene resin, linear aldehyde compounds having 7 to 10 carbon atoms, which are odor-causing substances, are likely produced. However, even in such a case, by tailoring the antioxidant, the heavy metal deactivator, and various manufacturing methods, it is possible to suppress the production of linear aldehyde compounds having 7 to 10 carbon atoms to reduce odor emission.

### <Foaming agent>

The method for foaming of the foamable composition includes a chemical foaming method and a physical foaming method. The chemical foaming method is a process in which a compound added to the foamable composition is thermally decomposed to generate a gas, which produces bubbles. The physical foaming method is a process including impregnating the foamable composition with a liquid having a low boiling point (foaming agent) and then volatilizing the foaming agent to produce cells. Although the foaming method is not particularly limited, the chemical foaming method is preferable.

A thermally decomposable foaming agent is suitably used, and, for example, an organic or inorganic chemical foaming agent having a decomposition temperature of about 140°C to 270°C can be used.

Examples of the organic foaming agent include azo compounds such as azodicarbonamide, a metal azodicarboxylate (e.g. barium azodicarboxylate), and azobisisobutyronitrile; nitroso compounds such as N,N'-dinitrosopentamethylenetetramine; hydrazine derivatives such as hydrazodicarbonamide, 4,4'-oxybis(benzenesulfonyl hydrazide), and toluenesulfonyl hydrazide; and semicarbazide compounds such as toluenesulfonyl semicarbazide.

Examples of the inorganic foaming agent include acid ammonium, sodium carbonate, ammonium hydrogen carbonate, sodium hydrogen carbonate, ammonium nitrite, sodium borohydride, and monosodium citrate anhydrate.

In particular, in view of obtaining fine bubbles and the viewpoint of economic efficiency and safety, an azo compound and a nitroso compound are preferable; azodicarbonamide, azobisisobutyronitrile, and N,N'-dinitrosopentamethylenetetramine are more preferable; and azodicarbonamide is particularly preferable.

One foaming agent may be used singly, and two or more thereof may be used in combination.

In view of easily adjusting the expansion ratio of the formed product within the above range, the amount of the foaming agent added to the foamable composition is preferably 1 to 20 parts by mass, more preferably 2 to 15 parts by mass, and even more preferably 3 to 12 parts by mass relative to 100 parts by mass of the polyolefin resin.

### <Heavy metal deactivator>

The foamable composition used for the polyolefin resin foam of the present invention preferably contains a heavy metal deactivator. When a heavy metal deactivator is contained, oxidative deterioration of the polyolefin resin resulting from heavy metal ions can be suppressed, and release of linear aldehyde compounds having 7 to 10 carbon atoms and especially n-nonylaldehyde from the polyolefin resin foam can be further reduced. The metal deactivator content is preferably 0.6 to 10.0 parts by mass and more preferably 1.0 to 4.0 parts by mass relative to 100 parts by mass of the polyolefin resin.

When the heavy metal deactivator content is 0.6 parts by mass or more relative to 100 parts by mass of the polyolefin resin, oxidative deterioration of the polyolefin resin due to heavy metal ions can be further suppressed, and release of linear aldehyde compounds having 7 to 10 carbon atoms and especially n-nonylaldehyde from the crosslinked polyolefin resin foam can be further reduced. When the heavy metal deactivator content is 5.0 parts by mass or less relative to 100 parts by mass of the polyolefin resin, an excessive heavy metal deactivator can be suppressed from turning into an odorous substance.

The type of the heavy metal deactivator is not particularly limited, and examples include oxalic acid derivatives, salicylic acid derivatives, and hydrazide derivatives. Among these, hydrazide derivatives are preferred in view of effectively reducing the release of linear aldehyde compounds having 7 to 10 carbon atoms and especially n-nonylaldehyde from the polyolefin resin foam.

Examples of hydrazide derivatives include N,N'-bis{3-(3,5-di-tert-butyl-4-hydroxyphenyl)propionyl}hydrazine and bis(2-phenoxypropionyl hydrazide) isophthalate. Among these, N,N'-bis{3-(3,5-di-tert-butyl-4-hydroxyphenyl)propionyl}hydrazine is preferred in view of further reducing the amount of linear aldehyde compounds having 7 to 10 carbon atoms and especially n-nonylaldehyde released from the crosslinked polyolefin resin foam.

One heavy metal deactivator may be used singly, and two or more thereof may be used in combination.

### <Other additives>

The foamable composition may contain additives commonly used in foams, such as heat stabilizers, colorants, flame retardants, antistatic agents, fillers, rust inhibitors, and decomposition temperature regulators as necessary.

### [Method for producing polyolefin resin foam]

The method for producing the polyolefin resin foam of the present invention includes the following steps 1 to 3:
(step 1) the step of processing a foamable composition containing a polyolefin resin into a sheet form to produce a foamable sheet;
(step 2) the step of irradiating the foamable sheet with ionizing radiation to produce a crosslinked foamable sheet; and
(step 3) the step of causing the crosslinked foamable sheet to foam to produce a polyolefin resin foam.

### (Step 1)

Step 1 is the step of processing a foamable composition containing a polyolefin resin into a sheet form to produce a foamable sheet. A foamable polyolefin resin sheet can be produced by kneading a foamable composition with a kneader such as a Banbury mixer or a pressure kneader and then continuously extruding the composition with an extruder, a calender, or conveyor belt casting. As described above, the foamable composition preferably contains an antioxidant, a crosslinking aid, a foaming agent, and the like, and more preferably contains an antioxidant, a heavy metal deactivator, a crosslinking aid, a foaming agent, and the like.

### (Step 2)

Step 2 is the step of irradiating the foamable sheet with ionizing radiation to produce a crosslinked foamable sheet.

In view of reducing the content of aldehyde compounds having 6 to 11 carbon atoms and, in particular, in view of reducing the release of linear aldehyde compounds having 7 to 10 carbon atoms and especially n-nonylaldehyde, the irradiation dose when applying ionizing radiation is 1.2 to 2.5 Mrad, preferably 1.3 to 2.3 Mrad, and more preferably 1.4 to 2.1 Mrad.

In view of reducing the content of aldehyde compounds having 6 to 11 carbon atoms and, in particular, in view of reducing the release of linear aldehyde compounds having 7 to 10 carbon atoms and especially n-nonylaldehyde, it is preferable to regulate the amount of the crosslinking aid in the foamable composition to the above range and also regulate the irradiation conditions of ionizing radiation to the above range.

The ionizing radiation may be applied to one surface of the foamable sheet or may be applied to both surfaces, and in view of reducing the content of aldehyde compounds having 6 to 11 carbon atoms and, in particular, in view of reducing the release of linear aldehyde compounds having 7 to 10 carbon atoms and especially n-nonylaldehyde, both surfaces are preferably irradiated.

Examples of ionizing radiation include electron beam, α-ray, β-ray, γ-ray, and X-ray. Among these, electron beam is preferred in view of productivity and uniform irradiation.

### (Step 3)

Step 3 is the step of causing the crosslinked foamable sheet to foam to produce a polyolefin resin foam in a sheet form. Examples of methods for causing the crosslinked foamable sheet to foam include a batch method involving using an oven or the like, and a continuous foaming method in which the crosslinked foamable sheet is continuously passed through a heating furnace.

The temperature when the crosslinked foamable sheet is foamed is preferably 140 to 280°C and more preferably 160 to 280°C. When 140°C or higher, foaming can readily proceed, and when 280°C or lower, the content of aldehyde compounds having 6 to 11 carbon atoms can be reduced and, in particular, the production of linear aldehyde compounds having 7 to 10 carbon atoms and especially n-nonylaldehyde can be suppressed. The temperature when the crosslinked foamable sheet is foamed is more preferably 180 to 270°C, further preferably 200 to 260°C, and further preferably 210 to 240°C.

While the method for regulating the temperature is not particularly limited, hot air may be used, and infrared light may be used.

The crosslinked foamable sheet may be stretched in one or both of the MD direction and the CD direction during or after foaming.

### [Formed product]

A formed product obtained by shaping the polyolefin resin foam of the present invention is obtained by shaping the polyolefin resin foam of the present invention by a known method. When producing the formed product, other materials such as a base material and a skin material may be bonded to the polyolefin resin foam to make a laminate. The formed product of the present invention is preferably obtained by laminating a skin material on the polyolefin resin foam.

Examples of the skin material include a polyvinyl chloride sheet; a sheet made of mixed resin of polyvinyl chloride and ABS resin; a thermoplastic elastomer sheet; a textile, a knitted product, and a nonwoven fabric made from natural fiber or synthetic fiber; leather such as artificial leather and synthetic leather; and metal. A formed product having a design such as a lenticel or grain pattern on the surface may be manufactured with use of a silicone stamper having a concave-convex pattern transferred from real leather, a stone or a wood.

A formed product having a skin material laminated on a polyolefin resin foam can be obtained by laminating the skin material on the polyolefin resin foam and shaping the laminate.

Examples of the method for laminating a skin material on the surface include an extrusion lamination method, an adhesion lamination method including successive steps of adhesive application and lamination, a thermal lamination method (heat seal method), a hot melt method, a high-frequency welding method, and for metal or the like, an electroless plating method, an electrolytic plating method, and a vapor deposition method, any of which can be employed as long as both materials can be adhered to each another.

The base material is employed as the framework of the formed product, and a thermoplastic resin is typically used. Examples of the thermoplastic resin for use as a base material include the polyolefin resin described above, a copolymer of ethylene with an α-olefin, vinyl acetate, or an acrylate, an ABS resin, and a polystyrene resin.

Examples of the forming method of the formed product of the present invention include stamp forming, vacuum forming, compression forming, and injection molding. Among them, stamp forming and vacuum forming are preferred. The vacuum forming includes forming over a male mold and forming in a female mold, any one of which may be used, and forming over a male mold is more preferred.

The formed product obtained by shaping the polyolefin resin foam of the present invention can be used as a heat insulator, a cushion, and the like. The formed product obtained by shaping the polyolefin resin foam of the present invention unlikely produces an odor even in hot summertime and, therefore, can be suitably used especially in the automobile field as vehicle interior materials such as a ceiling material, a door, and an instrument panel.

### Examples

The present invention will now be described in more detail by way of Examples.

### (Example 1)

A foamable composition obtained by mixing 60 parts by mass of a polypropylene resin, 40 parts by mass of linear low density polyethylene, 7 parts by mass of a foaming agent, 3 parts by mass of a crosslinking aid, and 2.5 parts by mass of a phenolic antioxidant was melt-kneaded at 180°C with a mono-axial extruder to give a foamable sheet. Both surfaces of the foamable sheet were irradiated with 2.0 Mrad of ionizing radiation (electron beam) at an accelerating voltage of 1000 keV to give a crosslinked foamable sheet. Thereafter, the crosslinked foamable sheet was fed to a vertical hot-air foaming furnace that was equipped with a corona treatment apparatus and had a furnace temperature of 230°C, and while being stretched, the crosslinked foamable sheet was heated and foamed with both surfaces being corona-treated at a discharge amount of 45 W·min/m². Thus the intended polyolefin resin foam was obtained.

The thickness, the expansion ratio, the aldehyde concentration, and odor evaluation I of the polyolefin resin foam were determined as follows. The results are shown in Table 1.

Details of the raw materials used in Examples 1 to 5 and Comparative Examples 1 to 6 are as follows:
- Polypropylene resin (PP): Ethylene-propylene random copolymer, manufactured by Sumitomo Chemical Co., Ltd., trade name "AD571", density 0.90 g/cm³, MFR 0.5 g/10 min (230°C)
- Linear low density polyethylene (LLDPE): manufactured by Tosoh Corporation, trade name "ZF231", MFR 2 g/10 min (190°C), density 0.917 g/cm³
- Foaming agent: Azodicarbonamide, manufactured by Eiwa Chemical Ind. Co., Ltd., trade name "Vinyfor AC-K3-TA", decomposition temperature: 210°C
- Crosslinking aid: 1,9-Nonanediol dimethacrylate, manufactured by Kyoeisha Chemical Co., Ltd., trade name "Light Ester 1,9ND"
- Phenolic antioxidant: manufactured by BASF Japan, trade name "Irganox 1010"

### (Examples 2 to 5, Comparative Examples 1 to 6)

Polyolefin resin foams were obtained in the same manner as in Example 1 except that the formulations, the crosslinking conditions, and the foaming conditions of foamable compositions were changed as shown in Tables 1 and 2.

In Example 3 and Comparative Example 2, infrared rays were used in place of hot air when foaming the foamable composition, or more specifically, a near-infrared heater provided in a foaming furnace was used.

In Comparative Example 6, the crosslinking aid was excessive, and foaming was not possible.

### (Example 6)

A foamable composition obtained by mixing 60 parts by mass of a polypropylene resin, 40 parts by mass of linear low density polyethylene, 2 parts by mass of a phenolic antioxidant, 1 part by mass of a heavy metal deactivator, 3 parts by mass of a crosslinking aid, and 8 parts by mass of a foaming agent was melt-kneaded at 180°C with a mono-axial extruder to give a foamable sheet. Both surfaces of the foamable sheet were irradiated with 2.0 Mrad of ionizing radiation (electron beam) at an accelerating voltage of 1000 keV to give a crosslinked foamable sheet. Thereafter, the crosslinked foamable sheet was fed to a vertical hot-air foaming furnace that was equipped with a corona treatment apparatus and had a furnace temperature of 250°C, and while being stretched, the crosslinked foamable sheet was heated and foamed with both surfaces being corona-treated at a discharge amount of 45 W·min/m². Thus the intended polyolefin resin foam was obtained.

The thickness, the apparent density, the aldehyde concentration, the aldehyde compound analysis, and odor evaluation II of the polyolefin resin foam were determined as follows. The results are shown in Table 3.

Details of the raw materials used in Examples 6 to 10 and Comparative Examples 7 to 8 are as follows:
- Polypropylene resin (PP): Ethylene-propylene random copolymer, manufactured by Sumitomo Chemical Co., Ltd., trade name "AD571", density 0.90 g/cm³, MFR 0.5 g/10 min (230°C)
- Linear low density polyethylene (LLDPE): manufactured by Prime Polymer Co., Ltd., trade name "ULTZEX 1020L", density 0.909 g/cm³, MFR 2 g/10 min (190°C)
- Foaming agent: Azodicarbonamide, manufactured by Eiwa Chemical Ind. Co., Ltd., trade name "Vinyfor AC-K3-TA", decomposition temperature: 210°C
- Crosslinking aid: 1,9-Nonanediol dimethacrylate, manufactured by Kyoeisha Chemical Co., Ltd., trade name "Light Ester 1,9ND", viscosity 8 mPa·s/25°C
- Heavy metal deactivator: N,N'-Bis{3-(3,5-di-tert-butyl-4-hydroxyphenyl)propionyl}hydrazine, manufactured by ADEKA Corporation, trade name "Adekastab CDA-10"
- Phenolic antioxidant: manufactured by BASF Japan, trade name "Irganox 1010"

### (Examples 7 to 10, Comparative Examples 7 and 8), Example 10 is not according to the invention

The polyolefin resin foams of Examples 7 to 10 and Comparative Examples 7 and 8 were obtained in the same manner as in Example 6 except that the formulations of foamable compositions were changed as shown in Table 3.

The results of the thickness, the apparent density, the aldehyde concentration, the aldehyde compound analysis, and odor evaluation II of the foams are shown in Table 3.

### (Thickness of foam)

The thickness of the foams of the Examples and the Comparative Examples was measured in accordance with JIS K 6767.

### (Expansion ratio)

The density of the foams obtained in the Examples and the Comparative Examples was measured in accordance with JIS K 7222, and the reciprocal thereof was regarded as an expansion ratio.

### (Aldehyde concentration)

The content of aldehyde compounds having 6 to 11 carbon atoms in the foams obtained in the Examples and the Comparative Examples was measured by DNPH derivatization/HPLC method.

First, 100 mL of a 75:25 solution of acetonitrile/water was added as a solvent to 10 mg of 2,4-dinitrophenylhydrazine (DNPH), the mixture was stirred, then 10 cc of a foam was added, and the mixture was stirred at 60°C for 2 hours. Thereafter, the mixture was filtered through a 200 mesh, and the resulting solution was quantitatively analyzed by high performance liquid chromatography (HPLC) to calculate the content of aldehyde compounds having 6 to 11 carbon atoms in the foam. HPLC measurement conditions are as follows.
Column: ZORBAX Bonus RP 4.6 mm × 150 mm, particle diameter 3.5 µm
Column temperature: 40°C
Mobile phase: Acetonitrile:water = 75:25
Flow rate: 1.0 mL/min
Sample: 20 µL
Wavelength: 360 nm

### (Analysis of aldehyde compound)

For the foams obtained in the Examples and the Comparative Examples, the concentrations of n-heptylaldehyde, n-octylaldehyde, n-nonylaldehyde, and n-decylaldehyde in aldehyde compound-containing nitrogen gas were measured as follows.

In order to sample the gas released from the foams, two 100 × 100 mm pieces cut out from the foams were placed in a 10 L sampling bag (manufactured by GL Sciences Inc., trade name "Skypia Bag AAK-10"). The opening of the sampling bag was closed with a heat sealer, and the sampling bag was filled with 5 L of nitrogen gas. This sampling bag was placed in a thermostat at 80°C for 2 hours. Accordingly, aldehyde compound-containing nitrogen gas was obtained. Then, 1 L of the aldehyde compound-containing nitrogen gas in the sampling bag was collected into a sampling tube (manufactured by GL Sciences Inc., trade name "Tenax TA 150 mg") with a sampling pump (manufactured by GL Sciences Inc., trade name "SP208-000 Dual II"). The sampling conditions were as follows.
Amount of filled gas: N₂, 5 L
Heating temperature: 80°C
Collection time: 1 hour
Collection amount: 1 to 2 L
Collection flow rate: 400 mL/min

The aldehyde compound-containing nitrogen gas after being sampled was thermally desorbed with a thermal desorption apparatus (manufactured by GL Sciences Inc., trade name "HandyTD TD265"). Then, the gas was introduced into a sniffing system (manufactured by GL Sciences Inc., trade name "OPV277") involving a gas chromatograph (manufactured by GL Sciences Inc., trade name "GC-4000 Plus (A type)") and analyzed for aldehyde compounds. Conditions of thermal desorption and gas chromatography were as follows.

### <Thermal desorption conditions>

System pressure: 190 kPa
Pre-purge time: 0 min
Thermal desorption temperature: 270°C
Thermal desorption time: 5 min
Heating rate: 45°C/sec

### <Gas chromatography conditions>

Column: InertCap Pure-WAX (manufactured by GL Sciences Inc.), inner diameter 0.25 mm, length 60 m, membrane thickness 0.25 µm
Temperature conditions: 40°C (6 min hold) - 10°C/min - 240°C (14 min hold)
Carrier gas: He, 160 kPa
Injection method: Split 10:1
Inlet temperature: 270°C
Detector: FID
Detector temperature: 280°C
H₂ flow rate: 35 mL/min
Makeup flow rate: N₂ 30 mL/min
Air flow rate: 250 mL/min

The detection peak of gas chromatography of n-heptylaldehyde is detected at a retention time of 17.8 min. The detection peak of gas chromatography of n-octylaldehyde is detected at a retention time of 20.1 min. The detection peak of gas chromatography of n-nonylaldehyde is detected at a retention time of 22.3 min. The detection peak of gas chromatography of n-decylaldehyde is detected at a retention time of 24.3 min.

A calibration curve for calculating the aldehyde compound concentration of the aldehyde compound-containing nitrogen gas from the results of gas chromatography measurement was created as follows.

About 100 mg each of n-heptylaldehyde, n-octylaldehyde, n-nonylaldehyde, and n-decylaldehyde was collected with an electronic balance, introduced into a 20 mL graduated flask, and diluted with methanol to prepare an aldehyde-mixed standard solution (concentration: 5000 µg/L). Then, 0.2 µL of this aldehyde-mixed standard solution was collected with a syringe. The collected aldehyde-mixed standard solution was added to a collecting tube (manufactured by GL Sciences Inc., trade name "Tenax TA 150 mg") or a sampling bag (manufactured by GL Sciences Inc., trade name "Skypia Bag AAK-10"). The collecting tube was set in a calibration curve creating tool of a sniffing system (manufactured by GL Sciences Inc., trade name "OPV277") and dry-purged (50 mL/min, 2 min). The sampling bag after the solution was added thereto was filled with 1 L of nitrogen and heated at 80°C for 2 hours with a thermostat, and the entirety of the gas in the sampling bag was collected into the collecting tube. Each collection tube was thermally desorbed with a thermal desorption apparatus (manufactured by GL Sciences Inc., trade name "HandyTD TD265") and introduced into a gas chromatograph. Then, a calibration curve was created using the results of gas chromatography measurement.

### (Odor evaluation I)

The odors of the foams that were obtained in the Examples and the Comparative Examples and aged at 80°C for 2 hours were evaluated as follows on a scale of 0 to 5.
1: No odor
2: Odor that can be barely perceived (detection threshold)
3: Weak odor that can be identified (recognition threshold)
4: Odor that can be easily perceived
5: Strong odor
6: Intense odor

### (Odor evaluation II)

An odor evaluation test was performed on the foams obtained in the Examples and the Comparative Examples.
The conditions of the odor evaluation test were as follows.
Sampling day: Immediately after foam production
Sampling size: 100 cm²
Odor bottle: 100 cm² glass container
Test temperature: 80°C × 2 hr → cooled to 60°C
Sniffing temperature: 60°C
Number of examiners: 5

How to smell odor: The lid of the odor bottle was opened, and the odor bottle was tilted 45° relative to the horizontal plane. Then, the nostrils were placed in the center of the opening of the odor bottle such that the nostrils were 1 cm away from the opening of the odor bottle, and the odor of the gas released from the odor bottle was smelled for 5 seconds or more and 10 seconds or less.

The odor was evaluated as follows. As reference solutions for odor intensity, aqueous n-butanol solutions having the following n-butanol concentrations were used. 150 mL each of these solutions was measured into a 1 L glass bottle, and its odor was used as a reference odor. The odor of the foams was evaluated based on the odor intensity of these reference odors.
Intensity grade 1: n-Butanol concentration 0 ml/L
Intensity grade 1.5: n-Butanol concentration 1.4 ml/L
Intensity grade 2: n-Butanol concentration 2.0 ml/L
Intensity grade 2.5: n-Butanol concentration 3.6 ml/L
Intensity grade 3: n-Butanol concentration 6.0 ml/L
Intensity grade 3.5: n-Butanol concentration 9.0 ml/L
Intensity grade 4: n-Butanol concentration 18.0 ml/L
Intensity grade 4.5: n-Butanol concentration 22.7 ml/L
Intensity grade 5: n-Butanol concentration 30.0 ml/L
Intensity grade 5.5: n-Butanol concentration 57.0 ml/L
Intensity grade 6: n-Butanol only

When the value of the evaluation criteria in odor evaluation I and the value of the intensity grade in odor evaluation II are the same, the odor intensities are comparable.

**Table 1**

| | | | Example 1 | Example 2 | Example 3 | Example 4 | Example 5 |
|---|---|---|---|---|---|---|---|
| Foamable composition | Resin 1 (PP) "AD571" | Parts by mass | 60 | 60 | 80 | 70 | 70 |
| | Resin 2 (LLDPE) "ZF231" | | 40 | 40 | 20 | 30 | 30 |
| | Foaming agent "AC-K3-TA" | | 7.0 | 6.5 | 7.0 | 6.5 | 6.5 |
| | Crosslinking aid "Light Ester 1,9-ND" | | 3.0 | 4.0 | 4.0 | 3.0 | 4.5 |
| | Antioxidant "Irganox 1010" | | 2.5 | 2.5 | 2.0 | 4.0 | 2.5 |
| Manufacturing condition | Crosslinking condition (Irradiation dose of electron beam) | Mrad | 2.0 | 1.5 | 1.5 | 2.0 | 1.5 |
| | Foaming condition | Method | Hot air | Hot air | Infrared | Hot air | Hot air |
| | | °C | 230 | 250 | 250 | 250 | 270 |
| Foam | Thickness | mm | 2.8 | 3.1 | 3.1 | 2.9 | 3.2 |
| | Expansion ratio | cc/g | 14.3 | 15.2 | 14.9 | 15.2 | 15.9 |
| | Aldehyde concentration (Total of C6-C11) | vol ppm | 0.01 | 0.03 | 0.07 | 0.04 | 0.08 |
| | Odor evaluation I | | 2 | 2 | 3 | 2 | 3 |

**Table 2**

| | | | Comparative Example 1 | Comparative Example 2 | Comparative Example 3 | Comparative Example 4 | Comparative Example 5 | Comparative Example 6 |
|---|---|---|---|---|---|---|---|---|
| Foamable composition | Resin 1 (PP) "AD571" | Parts by mass | 60 | 60 | 70 | 70 | 60 | 60 |
| | Resin 2 (LLDPE) "ZF231" | | 40 | 40 | 30 | 30 | 40 | 40 |
| | Foaming agent "AC-K3-TA" | | 6.5 | 6.0 | 7.0 | 7.0 | 6.5 | 6.5 |
| | Crosslinking aid "Light Ester 1,9-ND" | | 3.0 | 3.0 | 3.0 | 3.0 | 1.8 | 5.3 |
| | Antioxidant "Irganox 1010" | | 2.0 | 2.0 | 0.8 | 8.0 | 2.5 | 2.5 |
| Manufacturing condition | Crosslinking condition (Irradiation dose of electron beam) | Mrad | 2.5 | 2.0 | 2.0 | 2.0 | 3.5 | 1.0 |
| | Foaming condition | Method | Hot air | Infrared | Hot air | Hot air | Hot air | Hot air |
| | | °C | 250 | 270 | 250 | 250 | 250 | 250 |
| Foam | Thickness | mm | 2.9 | 3.3 | 2.9 | 3.1 | 3.0 | - |
| | Expansion ratio | cc/g | 15.3 | 16.1 | 14.8 | 15.4 | 15.1 | - |
| | Aldehyde concentration (Total of C6-C11) | vol ppm | 0.3 | 1.0 | 1.1 | 0.6 | 1.3 | - |
| | Odor evaluation I | | 4 | 5 | 5 | 4 | 4 | - |

**Table 3**

| | | | Example 6 | Example 7 | Example 8 | Example 9 | Example 10* | Comparative Example 7 | Comparative Example 8 |
|---|---|---|---|---|---|---|---|---|---|
| Foamable composition | Resin 1 PP | Parts by mass | 60 | 60 | 60 | 60 | 60 | 60 | 60 |
| | Resin 2 LLDPE | Parts by mass | 40 | 40 | 40 | 40 | 40 | 40 | 40 |
| | Antioxidant | Parts by mass | 2 | 4 | 2 | 1 | 0.5 | 1 | 8 |
| | Heavy metal deactivator | Parts by mass | 1 | 1 | 2 | 4 | 1 | 0.5 | 0.5 |
| | Crosslinking aid | Parts by mass | 3 | 3 | 3 | 3 | 3 | 2 | 4 |
| | Foaming aid | Parts by mass | 8 | 8 | 8 | 8 | 8 | 8 | 8 |
| Manufacturing condition | Crosslinking condition (Irradiation dose of electron beam) | Mrad | 2.0 | 2.0 | 2.0 | 2.0 | 2.0 | 2.0 | 2.0 |
| | Foaming condition | Method | Hot air | Hot air | Hot air | Hot air | Hot air | Hot air | Hot air |
| | | °C | 250 | 250 | 250 | 250 | 250 | 250 | 250 |
| Evaluation | Thickness of foam | mm | 2.9 | 3.0 | 3.0 | 3.1 | 3.0 | 3.1 | 3.3 |
| | Apparent density of foam | kg/m³ | 67 | 66 | 67 | 64 | 67 | 65 | 75 |
| | Expansion ratio | cc/g | 14.9 | 15.2 | 14.9 | 15.6 | 14.9 | 15.4 | 13.3 |
| | Aldehyde concentration (Total of C6-C11) | vol ppm | 0.06 | 0.05 | 0.06 | 0.05 | 0.04 | 0.4 | 0.5 |
| | n-Nonylaldehyde concentration | vol ppm | 0.014 | 0.010 | 0.012 | 0.010 | 0.090 | 0.100 | 0.120 |
| | n-Octylaldehyde concentration | vol ppm | 0.010 | 0.010 | 0.010 | 0.010 | 0.060 | 0.062 | 0.064 |
| | n-Heptylaldehyde concentration | vol ppm | 0.010 | 0.008 | 0.009 | 0.008 | 0.058 | 0.056 | 0.059 |
| | n-Decylaldehyde concentration | vol ppm | 0.010 | 0.006 | 0.006 | 0.006 | 0.055 | 0.059 | 0.061 |
| | Odor evaluation II Odor intensity (grade) | - | 1.5 | 1.5 | 1.5 | 1.5 | 3.0 | 4.0 | 4.0 |

| | | | | | | | | | |
|---|---|---|---|---|---|---|---|---|---|
| * (not according to the invention) | | | | | | | | | |

According to the results of the Examples above, favorable results were obtained in the odor evaluation from the polyolefin resin foams of the present invention, in which the content of aldehyde compounds having 6 to 11 carbon atoms was at a certain level or less. On the other hand, according to the results of the Comparative Examples, it was not possible to obtain favorable results in the odor evaluation when the content of aldehyde having 6 to 11 carbon atoms was large.

## Claims

1. A polyolefin resin foam having a content of aldehyde compounds having 6 to 11 carbon atoms of 0.1 ppm or less, as determined according to the description,
wherein the polyolefin resin foam is obtained by foaming a foamable composition comprising a polyolefin resin,
wherein the foamable composition comprises 1.0 to 5.0 parts by mass of an antioxidant relative to 100 parts by mass of the polyolefin resin, and
wherein the foamable composition comprises 2.0 to 5.0 parts by mass of a crosslinking aid relative to 100 parts by mass of the polyolefin resin.

2. The polyolefin resin foam according to claim 1, wherein a n-nonylaldehyde concentration of aldehyde compound-containing nitrogen gas obtained by filling a 10 L sampling bag containing 2 pieces of the polyolefin resin foam having a size of 100 mm × 100 mm × 3.1 ± 0.2 mm with 5 L of nitrogen gas and then heating the sampling bag at a heating temperature of 80°C for 2 hours is 0.07 vol ppm or less, as determined according to the description.

3. The polyolefin resin foam according to claim 2, wherein a n-octylaldehyde concentration of the aldehyde compound-containing nitrogen gas is 0.03 vol ppm or less, as determined according to the description.

4. The polyolefin resin foam according to claim 2 or 3, wherein a n-heptylaldehyde concentration of the aldehyde compound-containing nitrogen gas is 0.03 vol ppm or less, as determined according to the description.

5. The polyolefin resin foam according to any one of claims 2 to 4, wherein a n-decylaldehyde content of the aldehyde compound-containing nitrogen gas is 0.03 vol ppm or less, as determined according to the description.

6. The polyolefin resin foam according to any one of claims 1 to 5, wherein the foamable composition comprises 0.6 to 10.0 parts by mass of a heavy metal deactivator relative to 100 parts by mass of the polyolefin resin.

7. A method for producing the polyolefin resin foam according to any one of claims 1 to 6, the method comprising steps 1 to 3 below:
(step 1) the step of processing a foamable composition comprising a polyolefin resin into a sheet form to produce a foamable sheet;
(step 2) the step of irradiating the foamable sheet with ionizing radiation in an irradiation dose of 1.2 to 2.5 Mrad to produce a crosslinked foamable sheet; and
(step 3) the step of causing the crosslinked foamable sheet to foam to produce the polyolefin resin foam.

8. The method for producing a polyolefin resin foam according to claim 7, wherein in step 3, the crosslinked foamable sheet is foamed at 140 to 280°C.

9. A formed product obtained by shaping the polyolefin resin foam according to any one of claims 1 to 6.

10. The formed product according to claim 9, having a skin material laminated on the polyolefin resin foam.

11. The formed product according to claim 9 or 10, wherein the formed product is an automobile interior material.

## Patentansprüche

1. Polyolefinharzschaum mit einem Gehalt an Aldehydverbindungen mit 6 bis 11 Kohlenstoffatomen von 0,1 ppm oder weniger, wie gemäß der Beschreibung bestimmt,
wobei der Polyolefinharzschaum durch Aufschäumen einer schäumbaren Zusammensetzung erhalten wird, die ein Polyolefinharz umfasst,
wobei die schäumbare Zusammensetzung 1,0 bis 5,0 Massenteile eines Antioxidationsmittels, bezogen auf 100 Massenteile des Polyolefinharzes, umfasst, und
wobei die schäumbare Zusammensetzung 2,0 bis 5,0 Massenteile eines Vernetzungshilfsmittels, bezogen auf 100 Massenteile des Polyolefinharzes, umfasst.

2. Polyolefinharzschaum nach Anspruch 1, wobei die n-Nonylaldehydkonzentration des eine Aldehydverbindung enthaltenden Stickstoffgases, die durch Befüllen eines 10 l-Probenbeutels, der 2 Stücke des Polyolefinharzschaums mit einer Größe von 100 mm × 100 mm × 3,1 ± 0,2 mm enthält, mit 5 l Stickstoffgas und anschließendes Erwärmen des Probenbeutels bei einer Erwärmungstemperatur von 80°C für 2 Stunden erhalten wird, 0,07 Vol.-ppm oder weniger beträgt, wie gemäß der Beschreibung bestimmt.

3. Polyolefinharzschaum nach Anspruch 2, wobei die n-Octylaldehydkonzentration des die Aldehydverbindung enthaltenden Stickstoffgases 0,03 Vol.-ppm oder weniger beträgt, wie gemäß der Beschreibung bestimmt.

4. Polyolefinharzschaum nach Anspruch 2 oder 3, wobei die n-Heptylaldehydkonzentration des die Aldehydverbindung enthaltenden Stickstoffgases 0,03 Vol.-ppm oder weniger beträgt, wie gemäß der Beschreibung bestimmt.

5. Polyolefinharzschaum nach einem der Ansprüche 2 bis 4, wobei der n-Decylaldehydgehalt des die Aldehydverbindung enthaltenden Stickstoffgases 0,03 Vol.-ppm oder weniger beträgt, wie gemäß der Beschreibung bestimmt.

6. Polyolefinharzschaum nach einem der Ansprüche 1 bis 5, wobei die schäumbare Zusammensetzung 0,6 bis 10,0 Massenteile eines Schwermetalldeaktivators, bezogen auf 100 Massenteile des Polyolefinharzes, enthält.

7. Verfahren zur Herstellung des Polyolefinharzschaums nach einem der Ansprüche 1 bis 6, wobei das Verfahren die nachstehenden Schritte 1 bis 3 umfasst:
(Schritt 1) den Schritt des Verarbeitens einer schäumbaren Zusammensetzung, die ein Polyolefinharz umfasst, in eine Plattenform, um eine schäumbare Platte herzustellen;
(Schritt 2) den Schritt des Bestrahlens der schäumbaren Platte mit ionisierender Strahlung in einer Bestrahlungsdosis von 1,2 bis 2,5 Mrad, um eine vernetzte schäumbare Platte herzustellen; und
(Schritt 3) den Schritt des Aufschäumens der vernetzten schäumbaren Platte, um den Polyolefinharzschaum herzustellen.

8. Verfahren zur Herstellung eines Polyolefinharzschaums nach Anspruch 7, wobei in Schritt 3 die vernetzte schäumbare Platte bei 140 bis 280°C aufgeschäumt wird.

9. Geformtes Produkt, erhalten durch Formen des Polyolefinharzschaums nach einem der Ansprüche 1 bis 6.

10. Geformtes Produkt nach Anspruch 9, bei dem auf den Polyolefinharzschaum ein Hautmaterial laminiert ist.

11. Geformtes Produkt nach Anspruch 9 oder 10, wobei das geformte Produkt ein Autoinnenraummaterial ist.

## Revendications

1. Mousse de résine de polyoléfine ayant une teneur en composés aldéhyde possédant de 6 à 11 atomes de carbone de 0,1 ppm ou moins, telle que déterminée conformément à la description,
dans laquelle la mousse de résine de polyoléfine est obtenue en amenant à l'état de mousse une composition expansible comportant une résine de polyoléfine,
dans laquelle la composition expansible comporte 1,0 à 5,0 parties en masse d'un antioxydant par rapport à 100 parties en masse de la résine de polyoléfine, et
dans laquelle la composition expansible comporte 2,0 à 5,0 parties en masse d'une aide à la réticulation par rapport à 100 parties en masse de la résine de polyoléfine.

2. Mousse de résine de polyoléfine selon la revendication 1, dans laquelle une concentration en n-nonylaldéhyde d'azote gazeux contenant un composé aldéhyde obtenu en remplissant un sac de prélèvement de 10 1 contenant 2 morceaux de la mousse de résine de polyoléfine ayant une taille de 100 mm × 100 mm × 3,1 ± 0,2 mm avec 5 l d'azote gazeux et en chauffant ensuite le sac de prélèvement à une température de chauffage de 80 °C pendant 2 heures, est de 0,07 ppm en volume ou moins, telle que déterminée conformément à la description.

3. Mousse de résine de polyoléfine selon la revendication 2, dans laquelle la concentration en n-octylaldéhyde de l'azote gazeux contenant un composé aldéhyde est de 0,03 ppm en volume ou moins, telle que déterminée conformément à la description.

4. Mousse de résine de polyoléfine selon la revendication 2 ou 3, dans laquelle la concentration en n-heptylaldéhyde du gaz azoté contenant un composé aldéhyde est de 0,03 ppm en volume ou moins, telle que déterminée conformément à la description.

5. Mousse de résine de polyoléfine selon l'une quelconque des revendications 2 à 4, dans laquelle la teneur en n-décylaldéhyde de l'azote gazeux contenant un composé aldéhyde est de 0,03 ppm en volume ou moins, telle que déterminée conformément à la description.

6. Mousse de résine de polyoléfine selon l'une quelconque des revendications 1 à 5, dans laquelle la composition expansible comporte 0,6 à 10,0 parties en masse d'un désactivateur de métaux lourds par rapport à 100 parties en masse de la résine de polyoléfine.

7. Procédé pour produire la mousse de résine de polyoléfine selon l'une quelconque des revendications 1 à 6, le procédé comportant les étapes 1 à 3 ci-dessous :
(étape 1) l'étape consistant à transformer une composition expansible comportant une résine de polyoléfine en une feuille pour produire une feuille expansible ;
(étape 2) l'étape consistant à soumettre la feuille expansible à un rayonnement ionisant à une dose d'irradiation de 1,2 à 2,5 Mrad pour produire une feuille expansible réticulée ; et
(étape 3) l'étape consistant à amener la feuille expansible réticulée à l'état de mousse pour produire la mousse de résine de polyoléfine.

8. Procédé de production d'une mousse de résine de polyoléfine selon la revendication 7, dans lequel, à l'étape 3, la feuille réticulée expansible est amenée à l'état de mousse à une température de 140 à 280 °°C.

9. Produit mis en forme obtenu en façonnant la mousse de résine de polyoléfine selon l'une quelconque des revendications 1 à 6.

10. Produit mis en forme selon la revendication 9, ayant un matériau de peau stratifié sur la mousse de résine de polyoléfine.

11. Produit mis en forme selon la revendication 9 ou 10, dans lequel le produit mis en forme est un matériau d'intérieur d'une automobile.
